# EUROPEAN PATENT APPLICATION

(11) **EP 1 318 455 A2**
(43) Date of publication of application: **11.06.2003**
(21) Application number: 03004538.9
(22) Date of filing: 16.07.1999
(51) Int. Cl.: G06F 11/273, G06F 17/60

(54) **Remote supporting system**

(62) Divisional of application: 99113929.6
(71) Applicant: Cast Co., Inc., Nagoya, Aichi-ken, 457-0821 (JP)
(72) Inventor: Toshihiko, Murata, Nagoya, Aichi-ken, 457-0821 (JP)
(74) Representative: Trösch, Hans-Ludwig

(57) **Abstract**

A remote support system by which a support computer in a support center supports a user computer by holding an identical screen as that of the user computer in common is disclosed. In the remote support system, wherein a user computer connects to a support computer through a circuit, the support computer in a support center holds the identical screen as that of the user computer in common, and a supporter supports a user by operating in the identical screen as that of the user computer displayed on the support computer, enabling the user to understand through the identical screen troubleshooting countermeasures from the supporter.

## Description

### BACKGROUND OF THE INVENTION

### Field of the Invention

The present invention relates to a remote supporting system, device, and memory medium which enables a computer in a support center to support a user operating a computer smoothly by remote controlling the user's computer.

### Description of the Related Art

Since the operating system (OS hereinafter), e.g., windows 95 has been used in common, computer users connect various peripheral equipment to the Central Processing Unit (CPU) by themselves or use various application programs. To connect a new peripheral equipment to the CPU, users have to install an OS called driver, which is to control inputs and outputs of the equipment, and set up many parameters characteristic to the equipment. All these operations should be done by users themselves. And recently, with respect to the application programs, not a manual book enclosed in the application program package but an online help shown in the screen is used generally.

It is, however, difficult and takes a large amount of time for users who are not used to operating computers to set up its parameter, with manual books in their hands. Moreover, there are some application programs which should be set up once more although they have already been set up before, and by that time users may have lost the manual books, which makes their setups impossible. Further, because online helps shown in the screen are too simple to follow in general, it is difficult to setup the application programs for users who operate them for the first time.

In those cases or in case of trouble, users may make a phone call to machine makers, application providers, or internet service providers and ask them the way to set up the parameters or the way to operate the application programs. However, supporters who indicate troubleshooting countermeasure cannot see the screen of user computers and it has been difficult for them to give users proper answers because all they could do is to imagine the state of the screen. And because aural data is the only way for users to convey the condition of the screen, the accurate information of trouble was difficult to be understood by the supporters.

### SUMMARY OF THE INVENTION

A first object of the present invention is, therefore, to solve those problems by enabling a supporter computer and a user computer to hold the identical screen in common.

Still another object of the present invention is to transmit aural data in both directions through the circuit at the same time.

A further object of the present invention is to enable the user to receive troubleshooting countermeasure from supporters rapidly and properly.

To achieve the above objects, the present invention provides a remote supporting system in which a support computer in a support center holds a screen identical to that of a user computer, the user computer connects to the support computer through a circuit, the support computer in the support center hold the screen identical to that of the user computer in common, aural data of the user computer and the support computer are transmitted in both directions through the circuit, and a supporter supports a user by operating in the screen identical to that of the user computer displayed on support computer and sending the aural data, enable the user to understand through the identical screen and the aural data.

To connect the circuit, the user computer connects to an internet, and the support computer in the support center connects to an internet. When the support center is placed in a network where the user computer belongs to, the circuit can be connected through a local area network (LAN hereinafter) or a wide area network (WAN hereinafter).

The present invention also provides a means to connect circuit between the user computer and the support computer, an aural data mutual transmitting device in which aural data of the supporter in the support center is outputted to the user computer and aural data of the user is inputted in the user computer, a means to transmit image data by which the screen of the user computer is sent to the circuit, and a means to input remote controlling by which the user computer receives an operation input of the support computer in the support center through the circuit.

Further, the present invention provides a memory medium which memorizes a program readable to a computer, the program comprising a process which commands to connect the circuit between the support computer in the support center and the user computer, a process in which aural data is inputted in a microphone, a process in which the screen data of the user computer is transmitted through the circuit, and a process in which the user computer receives the command data transmitted by the support computer in the support center through the circuit and controls itself in accordance with the command data.

The program stored in the memory medium may provide a process in which the support computer in the support center displays the screen identical to that of the user computer through the circuit, and also a process in which the operation input data is transmitted from the support computer to the user computer through the circuit. Moreover, the present invention also provides a process in which the operation priority is changed to a side click operation with a mouse to be carried out between two screens of the user computer and the support computer. And the present invention also provides a process in which a command data is transmitted from one computer to the other computer to hold an application program in common, which is already started or not started yet in the other computer.

In the first aspect of the present invention, as described above, a support computer in a support center can display the screen identical to that of a user computer, and an operation data inputted in the support computer is identical to that inputted in the user computer. Accordingly, a supporter can see the screen of the user computer in the screen of the support computer and at once understand the condition of trouble in the user computer. Because the supporter can receive the condition of trouble by aural data from the user, the faster troubleshooting becomes possible. The supporter can at once understand what the user wants to do, and can send a command data directly to the user computer to setup its parameter or to switch the screen. Thus troubleshooting of the user computer becomes easier for the supporter.

In the second aspect of the invention, because a company, which provides a user supporting service of computer operation, and a user are connected through the internet, providing a general support to all the users who are connecting from extensive area becomes possible.

In the third aspect of the present invention, because the user can inform the supporter of the condition of trouble by aural data, checking in the screen of the user's own computer, the supporter and the user can communicate smoothly. And the user can see and understand the operation inputted by the supporter in the screen, informing the supporter of each steps of the user's understandings. Thus, supporting users becomes easier for supporters, and understanding of users become faster.

In the fourth aspect of the present invention, a program stored in a memory medium, which can carry out the process described above, is used on condition that it is installed in both the user computer and the support computer.

In the fifth aspect of the present invention, the supporting program is installed in the support computer in the support center. Further, in all these aspects, terms like "support center" or "user" are prescribed relatively. So reversely the screen of the support computer can be operated by the user in the screen of the user computer.

In the sixth aspect of the present invention, because an operation priority is given to a side of which click operation with a mouse is carried out, the user and the supporter can alternately operate in each screens of their computers. Accordingly, the user can, for example, operate in the way identical to that of the supporter operation as a review, and transmit the degree of the understanding through the identical screen, while he or she can have a troubleshooting countermeasure in the screen. Thus the supporter can confirm whether the user understands the operation precisely or not.

In the seventh aspect of the present invention, one computer can command the other computer to hold the identical application program in common which is already started or not been started yet. And that enables the supporter to hold the application in common which is already started in the user computer. Moreover, the supporter can select an application program, which the user has not started yet, start and hold it in common in the user computer with the user.

### BRIEF DESCRIPTION OF THE DRAWINGS

FIG. 1 is a view of a whole system according to a first embodiment of the present invention;
FIG. 2 is a view of a menu window shown in a screen according to the first embodiment;
FIG. 3 is a flow chart showing an operation of a user computer 1 according to the first embodiment;
FIG. 4 is a flow chart showing an operation of a support computer 3 according to the first embodiment; and
FIG. 5 is a view of a system according to other embodiment of the present invention.

### DETAILED DESCRIPTION OF THE PREFERRED EMBODIMENTS

Embodiments of the present invention will next be described in detail with reference to the drawings.

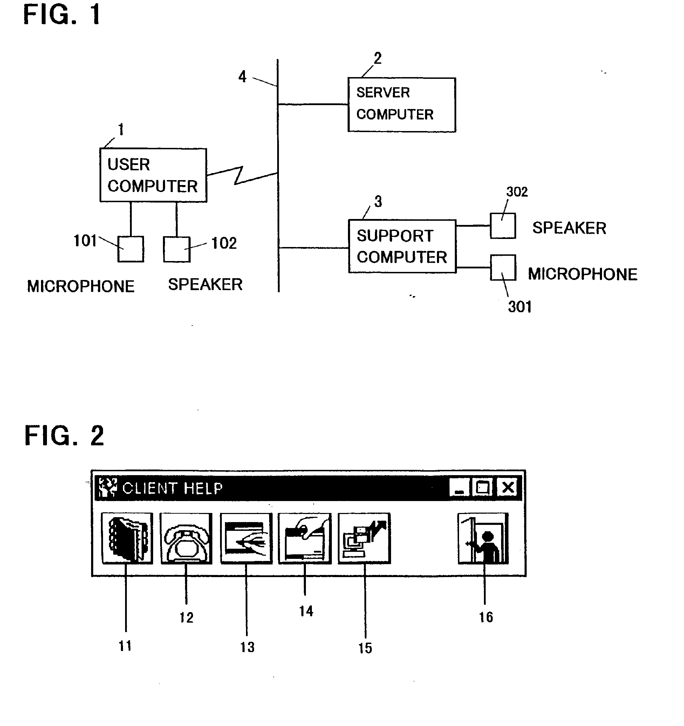

FIG. 1 is a view of showing a connection of computers in a network. A user computer 1 is installed in a office or in a house. The user computer 1 is connected to a server computer 2, with which an internet service provider provides internet service, through a telephone circuit 4. And a support computer 3, installed in a support center of a support service company which provides support service so as to support many users operating their computers, connects to the server computer 2 in the telephone network 4.

A support program of the present invention is to be used by installing in the user computer 1 and the support computer 3. This support program is operated under any OS, e.g. Windows 95, though it is not limited to it.

Then the operation of the system and device of the present invention is explained hereinafter. The support program is operated on condition that Windows 95 as OS is installed in a computer. When a user uses the computer 1 and has a trouble in operating it or setting its environment, the user selects and clicks an icon button in the computer 1 to connect to the server computer 2. Then a dial-up adapter, in which a telephone number is set up in advance to connect to the server computer 2 of a internet service provider in the telephone network, is started, and the user computer 1 is connected to the server computer 2.

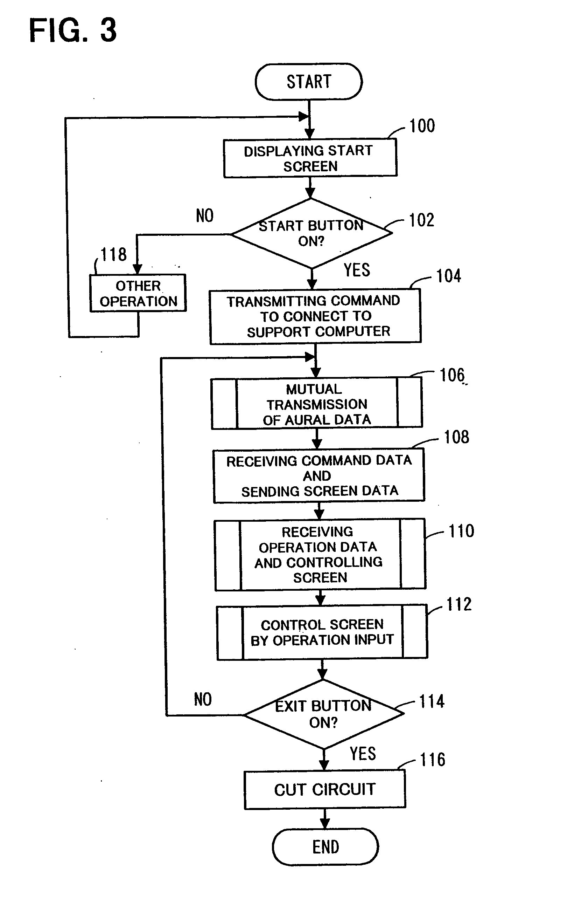

When the user clicks an icon button of the present support program in a screen of the computer 1, the support program is started. FIG. 3 shows a view of operating process of the support program in the user computer 1. At step 100 in FIG. 3, when the support program is started, a menu window shown in FIG. 2 appears. The menu window comprises six icon buttons. An icon button 11 is a button to set the environment of the user computer 1, e.g. a telephone number of a support center, passwords to access the center, and so on. An icon button 12 is a start button to connect the user computer 1 to the support computer 3. An icon button 13 is a button to command the user computer 1 and the support computer 3 to start up an application which is not started in common. An icon button 14 is a button to command the user computer 1 and the support computer 3 to hold an application to be operated in common which is already started. An icon button 15 is a button to command the user computer 1 to transfer its file. And an icon button 16 is a button to command the user computer 1 to exit the support program.

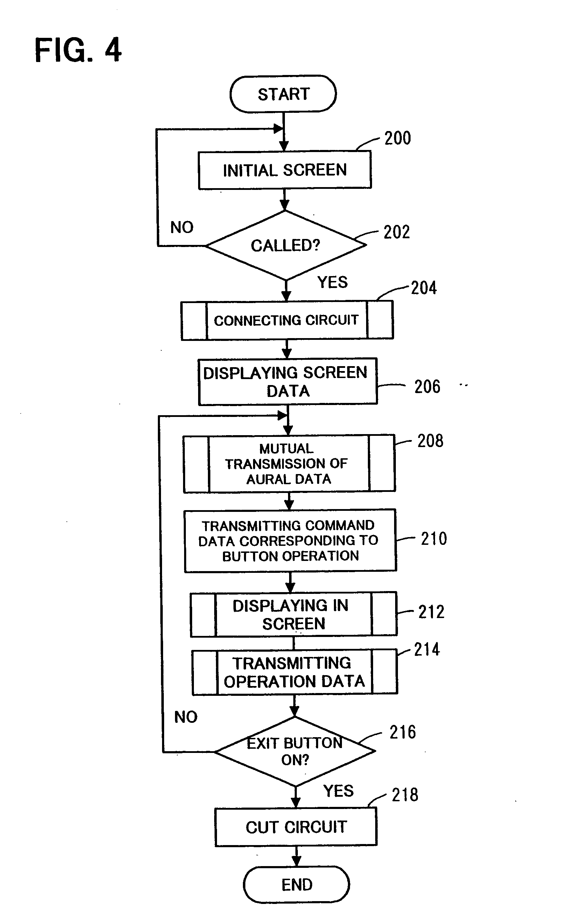

At step 102 of FIG. 3, when the icon button 12 is judged to be clicked with a mouse, a command is made to the server computer 2, which has already been connected to the user computer 1, to connect to the support computer 3 at step 104. The support computer 3 has already started the support program and is in a state of waiting. That is, the support computer 3 is showing a initial screen at step 200 shown in FIG. 4. When it is judged that at step 202 a circuit to the support computer is called by the server computer 2, the circuit connection process at step 204 is carried out. Accordingly, the telephone circuit is connected between the server computer 2 and the support computer 3. And when the circuit between the server computer 2 and the support compute 3 is connected, the user computer 1 is connected to the support computer 3 through the server computer 2.

When the circuit connection process is completed, the menu window shown in FIG. 2 also appears in the screen of the support computer 3 (step 206). The receiving treatment of aural data is carried out in the user computer 1 and the support computer 3 at step 106 (aural data transmitting device) and step 208, respectively. The aural signal inputted from a microphone 101 of the user computer 1 is sampled, transmitted to the support computer 3, and outputted from its speaker 302. Similarly, the aural signal inputted from a microphone 301 of the support computer 3 is sampled, transmitted to the user computer 1, and outputted from its speaker 102. The microphone 101 and the speaker 102 are parts of an aural data transmitter-receiver device. Under this condition, talking by aural data transmission becomes possible. This half duplex process enables the aural data to be transmitted with other data. Because the aural data is sampled, there is a large quantities of idle time. And even a continuous aural signal can be transmitted by so little data that other data can be transmitted by using the idle time. Because such transmitting process is a well-known prior art, its explanation is omitted.

First, a supporter, who provides support service to computer users, is informed from a user of the condition of trouble. The supporter tells the user not to operate any program but wait until the support computer 3 displays the identical screen as the user computer 1. The supporter clicks the icon button 14, which commands the support computer 3 to start up and hold the identical application as that of the user computer 1 operates in common. At step 210, a list of application programs which the user has already started in the user computer 1 is shown in the support computer 3. The supporter selects which application program to start and transmit a command data to the user computer 1. At step 108 (image data transmitting means), the user computer 1 receives the command data and transmits its own screen data to the support computer 3. The support computer 3 receives the screen data and displays the identical screen as that of the user computer 1 at step 212. Accordingly, both the support computer 3 and the user computer 1 display the identical screen. At step 214, when there were any input by a keyboard or operation with a mouse (called operation input hereinafter) in the support computer 3, its operation data is transmitted to the user computer 1. Then the user computer 1 receives the operation data at step 110 (remote control input means), and controls its own screen.

It is also possible to control its own screen when there is any operation input in the user computer 1 (step 112). Operations at steps 106 to 112 described above are carried out in the user computer 1 repeatedly at certain small amount of intervals, until it judges that the exit button 16 is clicked at step 114. Similarly, the support computer 3 carries out the operations at steps 208 to 214 repeatedly at certain small quantity of intervals.

Consequently, a mutual transmission of aural data between the user computer 1 and the support computer 3, a transmission of the own screen data from the user computer 1 to the support computer 3, and a transmission of operation input data from the support computer 3 to the user computer 1 are carried out in real time bases. The user computer 1 and the support computer 3 hold the identical screen in common, and their mutual operation input can be effective. When their operation inputs compete with each other, the operation input operated by clicking with a mouse is carried out preferentially.

Ordinary, while a troubleshooting countermeasure is being indicated by the supporter, the user do not give the user computer 1 an operation input. Thus the supporter can give an operation input to the user computer 1 on condition that the support computer 3 hold the identical screen as that of the user computer 1, and similarly the screen of the support computer 3 is controlled identically as that of the user computer 1.

When the exit button 16 of the user computer 1 and the support computer 3 is judged to be clicked at steps 116 and 216, the circuit cutting treatment is carried out at steps 116 and 218, respectively. When the icon button 13 is clicked in the screen of the support computer 3, the user computer 1 receives the command data and transmits a list of its application programs to the support computer 3. Then the support computer 3 selects and starts one application program from the list, holding the identical screen as the user computer 1 in common.

Thus, at a support service company, the support staffs, can carry out treatment steps directly in computers of many users, who need support in operating their computers, only by remote controlling in each of their own computers. Because the aural data is transmitted in both directions, supporters can indicate precise way of troubleshooting and user computers can recover from their trouble rapidly and precisely.

In the above-described embodiments, supporters and users are connected through internet; however, users may directly connect to the support computers through a network. Further, users may connect to support computers in a support center placed in a company through the LAN.

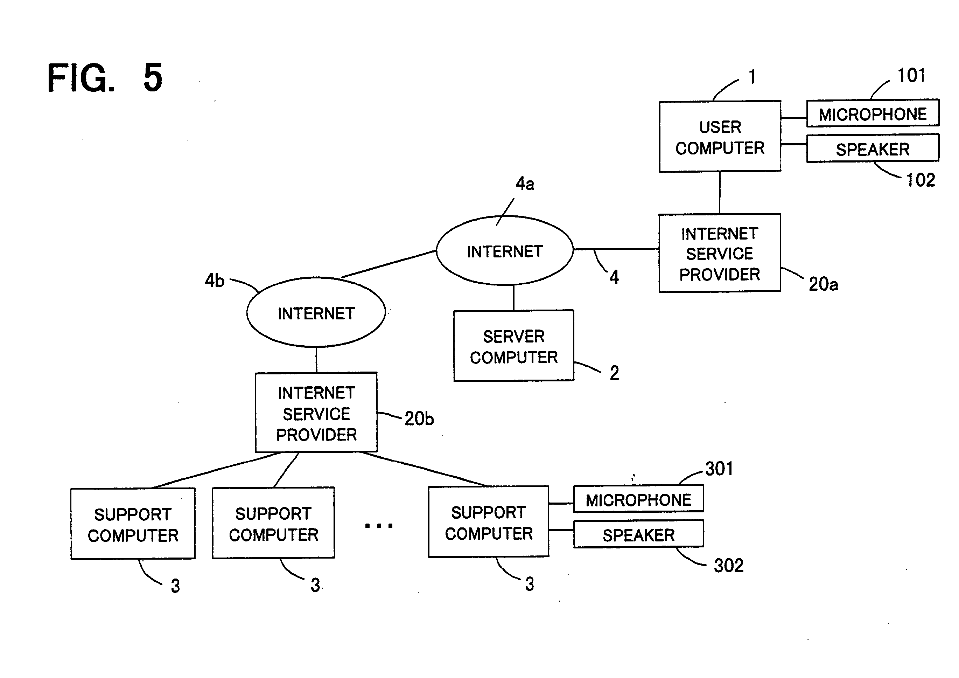

Further, the supporter can setup an environment of the user computer in place of the user. Additionally, as shown in FIG. 5, when the user computer 1 is connected to the support computer 3 through an internet 4a, an internet service provider 20b to which the support computer connects should not always the same as that of the user computer 1. When the user computer 1 connects to a server computer 2 through the internet 4a and get the address of one of the plural support computers 3 which is available to serve, the support computer 3 and the user computer 1 can transmit data directly and mutually through internet 4b by specifying the address of the user computer 1 and the support computer 3, respectively. The server computer 2 controls an address, a condition, and a connecting time of each user computers 1. In short, the user computer 1 should not always pass the server computer 2 to connect to the support computer 3 except when it begins and cuts the connection of the circuit.

While the invention has been described in connection with what are presently considered to be the most practical and preferred embodiments, it is to be understood that the invention is not to be limited to the disclosed embodiments, but on the contrary, the description is intended to cover various modifications and equivalent arrangements included within the spirit and scope of the appended claims. The present document claims the benefit of Japanese priority document, filed in Japan on December 26, 1997, the entire contents of which are incorporated herein by reference.

Obviously, numerous modifications and variations of the present invention are possible in the light of the above teachings. It is therefore to be understood that within the scope of the appended claims, the invention may be practiced otherwise than as specifically described herein.

A remote support system by which a support computer in a support center supports a user computer by holding an identical screen as that of the user computer in common is disclosed. In the remote support system, wherein a user computer connects to a support computer through a circuit, the support computer in a support center holds the identical screen as that of the user computer in common, and a supporter supports a user by operating in the identical screen as that of the user computer displayed on the support computer, enabling the user to understand through the identical screen troubleshooting countermeasures from the supporter.

## Claims

1. A user computer (1) used for a remote support system which enables a supporter to provide support to a user computer (1) with respect to operating an application program in said user computer by holding a screen of said user computer and a support computer (3) in common, comprising:
a connecting means (12, 104) for connecting said user computer to said support computer through a circuit (2, 4);
a means (108) for responding to a command data (13, 14) from said support computer, sending a list of application programs which are started or not started yet, and holding an application program which is selectively designated from said list of started application programs in common or starting and holding said application program which is not started yet in common;
an operation input means (112) for inputting an operation data to a screen displaying said application program of said user computer which is designated and started by said support computer;
a sending means (108) for sending a screen data of said application program started in said user computer in order that said support computer and said user computer hold a screen in common; and
a remote operation input means (110) for receiving an operation data which is input to a screen in said support computer by said supporter and transmitted from said support computer to said user computer through said circuit (2, 4), and for inputting said operation data as a command for said application program which is started and held in common.

2. A user computer according to claim 1, wherein said operation input means in either screen of said support computer or said user computer is made effective in response to a mouse click input.

3. A support computer (3) used for a remote support system which enables a supporter to provide support to a user computer (1) with respect to operating an application program in said user computer by holding a screen of said user computer and said support computer in common, comprising:
a command means (210) for starting and holding an application program in common, which sends a command data (14) to said user computer for requiring transmission of a list of application programs which are started in said user computer and selectively designates an application program which is started from said list received from said user computer in order to command to hold said application program in common, or which sends a command data (13) to said user computer for requiring transmission of a list of application programs which are not started yet in said user computer and selectively designates an application program which is not started yet from said list in order to send a command data to start and hold said application program in common which is not yet started;
a screen data receiving means (206) for receiving a screen data of said application program in said user computer designated by said command means and displaying said screen data of said user computer on a screen of said support computer;
an input means (214) for inputting an operation input data for said application program held in common to said screen displayed by said screen data receiving means; and
a sending means (214) for sending said operation input data which is input by said input means as an operation input data to said application program held by said user computer and said support computer in common.

4. A support computer according to claim 3, wherein said operation input means in either screen of said support computer or said user computer is made effective in response to a mouse click input.

5. A remote support system comprising a user computer according to claim 1 and a support computer according to claim 3.

6. A remote support system according to claim 5, wherein said circuit (2, 4) between said user computer and said support computer is connected when said user computer connects to an internet and said support computer connects to an internet.

7. A remote support system according to claim 5 or claim 6, wherein said operation input means in either screen of said support computer or said user computer is made effective in response to a mouse click input.

8. A method for a user computer (1) used for a remote support system which enables a supporter to provide support to a user computer (1) with respect to operating an application program in said user computer by holding a screen of said user computer and a support computer in common, comprising:
a connecting step for connecting said user computer to said support computer through a circuit (2, 4);
a step (108) for responding to a command data from said support computer, sending a list of application programs which are started or not started yet, and holding an application program which is selectively designated from said list of started application programs in common or starting and holding said application program which is not started yet in common;
an operation input step (112) for inputting an operation data to a screen displaying said application program of said user computer which is designated and started by said support computer;
a sending step (108) for sending a screen data of said application program started in said user computer in order that said support computer and said user computer hold a screen in common; and
a remote operation input step (110) for receiving an operation data which is input to a screen in said support computer by said supporter and transmitted from said support computer to said user computer through said circuit, and for inputting said operation data as a command for said application program which is started and held in common.

9. A method according to claim 8, further comprising a step for making said operation input effective in either screen of said support computer or said user computer in response to a mouse click input.

10. A method for a support computer (3) used for a remote support system which enables a supporter to provide support to a user computer (1) with respect to operating an application program in said user computer by holding a screen of said user computer and said support computer (3) in common, comprising:
a command step (210) for starting and holding an application program in common, which sends a command data to said user computer for requiring transmission of a list of application programs which are started in said user computer and selectively designates an application program which is started from said list received from said user computer in order to command to hold said application program in common, or which sends a command data to said user computer for requiring transmission of a list of application programs which are not started yet in said user computer and selectively designates an application program which is not started yet from said list in order to send a command data to start and hold said application program in common which is not yet started;
a screen data receiving step (206) for receiving a screen data of said application program in said user computer designated by said command step and displaying said screen data of said user computer on a screen of said support computer;
an input step (214) for inputting an operation input data for said application program held in common to said screen displayed by said screen data receiving step; and
a sending step (214) for sending said operation input data which is input by said input step as an operation input data to said application program held by said user computer and said support computer in common.

11. A method according to claim 10, further comprising a step for making said operation input effective in either screen of said support computer or said user computer in response to a mouse click input.

12. A remote support method comprising the steps of a method according to claim 8 and the steps of a method according to claim 10.

13. A method according to claim 12, wherein said circuit (2, 4) between said user computer and said support computer is connected when said user computer connects to an internet and said support computer connects to an internet.

14. A method according to claim 12 or claim 13, further comprising a step for making said operation input effective in either screen of said support computer or said user computer in response to a mouse click input.

15. A program for a user computer (1) used for a remote support system which enables a supporter to provide support to a user computer (1) with respect to operating an application program in said user computer by holding a screen of said user computer and a support computer (3) in common, said program being adapted for carrying out the steps of a method according to claim 8 or claim 9.

16. A program for a support computer (3) used for a remote support system which enables a supporter to provide support to a user computer (1) with respect to operating an application program in said user computer by holding a screen of said user computer and a support computer (3) in common, said program being adapted for carrying out the steps of a method according to claim 10 or claim 11.

17. A program for a remote support system which enables a supporter to provide support to a user computer (1) with respect to operating an application program in said user computer by holding a screen of said user computer and a support computer (3) in common, said program being adapted for carrying out the steps of a method according to any one of claims 12 to 14.
